Europäisches Patentamt

European Patent Office

Office européen des brevets

(11) Numéro de publication: **0 153 246**
**B1**

# FASCICULE DE BREVET EUROPEEN

(45) Date de publication du fascicule du brevet:
**07.01.88**

(51) Int. Cl.⁴: **A 01 K 61/00**

(21) Numéro de dépôt: **85400271.4**

(22) Date de dépôt: **15.02.85**

(54) Dispositif pour élevage marin à corps d'ancrage sous-marin.

(30) Priorité: **17.02.84 FR 8402417**

(43) Date de publication de la demande:
**28.08.85 Bulletin 85/35**

(45) Mention de la délivrance du brevet:
**07.01.88 Bulletin 88/1**

(84) Etats contractants désignés:
**AT BE CH DE GB IT LI LU NL SE**

(56) Documents cités:
**FR - A - 1 596 489
FR - A - 2 408 302**

(73) Titulaire: **LOREIM, Impasse de l'Industrie,
F-57320 Bouzonville (FR)**

(72) Inventeur: **Zabala, Jean-Claude, Ferme Brûlée,
F-57150 Creutzwald (FR)**
Inventeur: **Espuna, Henri, F-34700 Sallelles du Bosc (FR)**
Inventeur: **Maffre, Gérard, 13, avenue Voltaire,
F-34230 Raulhan (FR)**
Inventeur: **Haas, Justin, N.B. rue de la Paix,
F-57150 Creutzwald (FR)**

(74) Mandataire: **Chevallier, Robert Marie Georges et al,
Cabinet BOETTCHER 23, rue La Boétie, F-75008 Paris
(FR)**

ACTORUM AG

## Description

L'invention a pour objet un dispositif pour l'élevage en mer comprenant un corps d'ancrage sous-marin déplaçable en sens vertical afin de faciliter diverses opérations notamment la cueillette ou la capture des fruits de l'élevage.

Le FR-A- 2 408 302 décrit un dispositif ayant toutes les caractéristiques du préambule de la revendication principale et consistant en une nasse d'élevage munie d'un corps ballastable, ladite nasse étant destinée à être immergée entre deux eaux. L'ensemble est retenu par une amarre à un corps mort disposé sur le fond. On connait également de FR-A-1 596 489 un cadre flottant maintenu entre deux eaux par un système de lests et de bouées, l'ensemble étant amarré sur le fond par des éléments d'ancrage fixes.

Selon l'invention, le dispositif pour élevage marin comprend un corps délimitant un volume intérieur ayant au moins un tube de communication avec le milieu environnant et un tuyau souple de passage d'air susceptible d'être porté par un flotteur flottant à la surface, ledit corps étant muni à sa surface de moyens d'accrochage d'une extrémité de câbles, caractérisé en ce que le corps et son volume intérieur constituent également un corps d'ancrage (1) creux lesté pour reposer sur le fond grâce à des moyens d'immobilisation et en ce que des flotteurs sont fixés à l'autre extrémité des câbles.

Les câbles sont utilisés directement comme supports d'élevage ou comme moyens d'accrochage de cages d'élevage.

Les moyens tendant à immobiliser le corps au fond de la mer sont choisis entre divers moyens particuliers, en partie selon la nature du fond: semelle bétonnée de lestage, pieds d'ancrage s'enfonçant dans le fond, élément tubulaire transversant verticalement le corps de préférence en son centre pour permettre d'y enfoncer un pieu d'ancrage, etc...

Le volume intérieur du corps se remplit d'eau plus ou moins complètement, par le tube de communication, quand on le dépose au fond. Ce volume a une importance déterminée pour que, lorsqu'on y envoie de l'air comprimé par le tuyau souple, à travers la valve, à partir de la surface de la mer, cet air chasse l'eau et donne au corps une flottabilité suffisante pour le faire monter afin que les câbles ou les cages d'élevage deviennent accessibles à partir de la surface.

De préférence, le tube de communication est disposé dans la partie centrale du corps et il s'ouvre en-dessous de la face inférieure de ce corps. De cette façon, l'air comprimé envoyé par le tube souple a la possibilité de sortir sous le corps après avoir chassé l'eau du volume intérieur; cet air a un effet d'affouillement qui contribue à dégager le corps de la vase où il a tendance à s'enfoncer de lui-même. On notera que l'ensouillage qui se produit naturellement par suite du poids du corps contribue aussi à son immobilisation au fond.

On donnera maintenant, sans intention limitative et sans exclure aucune variante, une description de plusieurs exemples de réalisation. On se reportera aux dessins annexés dans lesquels:

la figure 1 est une vue en coupe par un plan vertical passant par l'axe d'un corps d'ancrage faisant partie d'un dispositif conforme à l'invention,

la figure 2 est une vue analogue à la figure 1 d'une variante de réalisation du corps d'ancrage faisant partie du dispositif,

la figure 3 est une vue d'ensemble d'un dispositif complet selon l'invention avec le corps d'ancrage de la figure 1 mais muni de pieds d'ancrage,

la figure 4 est une vue de dessus du dispositif complet de la figure 3,

la figure 5 est une vue d'ensemble à plus petite échelle d'une autre variante de réalisation d'un dispositif pour élevage marin conforme à l'invention.

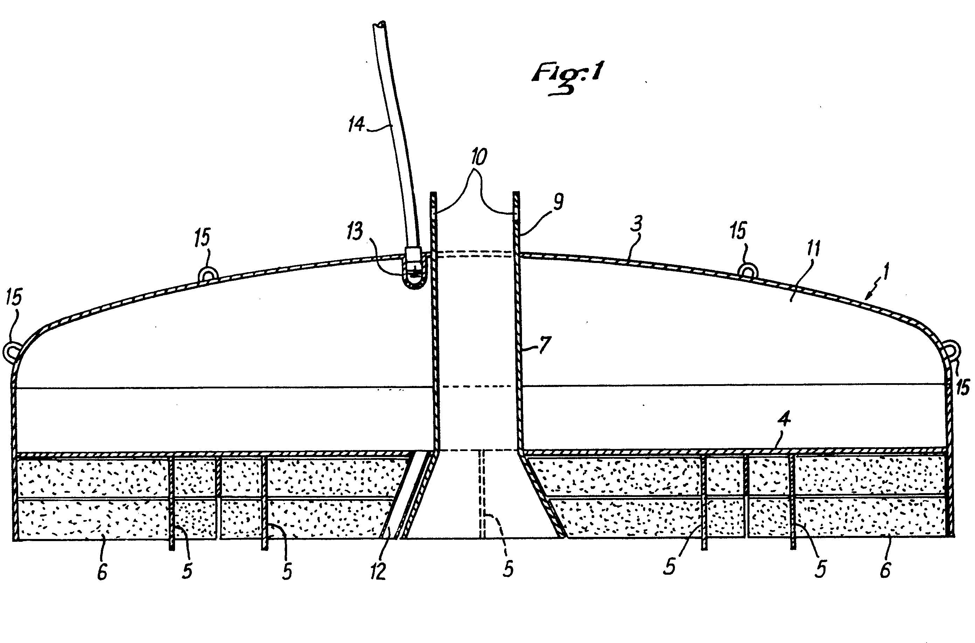

Le corps d'ancrage 1 illustré par la figure 1 a une paroi latérale 2 cylindrique et une paroi supérieure 3 qui est une tôle de fond à profil semi-elliptique soudé à la paroi latérale 2. Il a aussi une paroi de fond 4 qui est une tôle circulaire garnie sur sa face extérieure de raidisseurs 5 diamétraux et sécants. La paroi latérale 2 s'étend au-delà de la paroi de fond 4 et le volume contenant les raidisseurs 5 est rempli de béton armé 6 ou de plaques de béton préfabriquées et tenues en place par des moyens appropriés non représentés tels que des boulons par exemple.

Coaxialement à la paroi latérale cylindrique 2, un tube central 7 traverse totalement le corps d'ancrage. A sa partie inférieure il a une partie évasée 8, dans l'épaisseur du béton 6, et il dépasse au-dessus de la paroi supérieure 3 par une partie saillante 9 dans laquelle sont ménagées des ouvertures de manutention 10.

La paroi supérieure 3, la paroi latérale 2, la paroi de fond 4 et le tube central 7 limitent un volume intérieur 11 qui est mis en communication avec l'extérieur au moyen d'une tubulure 12 qui traverse la paroi de fond 4 et le béton 6. Cette tubulure est avantageusement fixée à la partie inférieure évasée 8 du tube central 7 et elle se trouve donc dans la zone centrale du corps 1.

Une valve 13 traverse la paroi supérieure 3, de préférence à proximité du tube central 7; elle est destinée à être raccordée à un tuyau souple 14 s'élevant jusqu'à un flotteur, à la surface de l'eau. Cette valve 13 permet à de l'air comprimé venant par le tube souple 14 d'entrer dans le volume intérieur 11 et elle l'empêche d'en sortir.

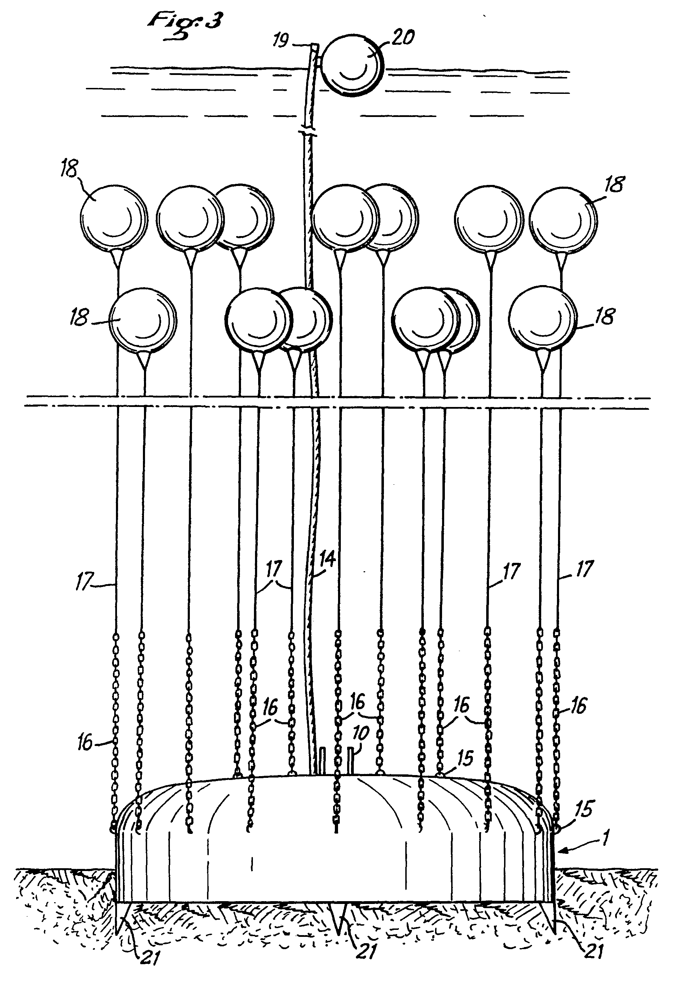

Sur la face extérieure du corps d'ancrage 1 sont répartis des oeillets d'accrochage 15 dont l'utilité apparaît sur la figure 3. Ils servent à la fixation de tronçons de chaînes 16 qui sont suivis de cordages 17 en polypropylène par exemple. Ces derniers ont leur extrémité opposée accrochée à des flotteurs 18 qui sont répartis de préférence entre plusieurs niveaux, deux niveaux dans cet exemple, qui sont situés en-dessous de la surface de l'eau. Cette disposition est préférée pour des raisons pratiques mais n'est pas imposée par l'invention. Les flotteurs 18 pourraient atteindre la surface de l'eau. Le tube souple 14 qui part de la valve 13 s'élève jusqu'à la surface où il est obturé par un moyen démontable 19 et porté par un flotteur 20. Sur la figure 3 on peut voir que le corps d'ancrage 1 est pourvu de pieds d'ancrage 21 taillés en pointe et solidement fixés à la paroi latérale 2.

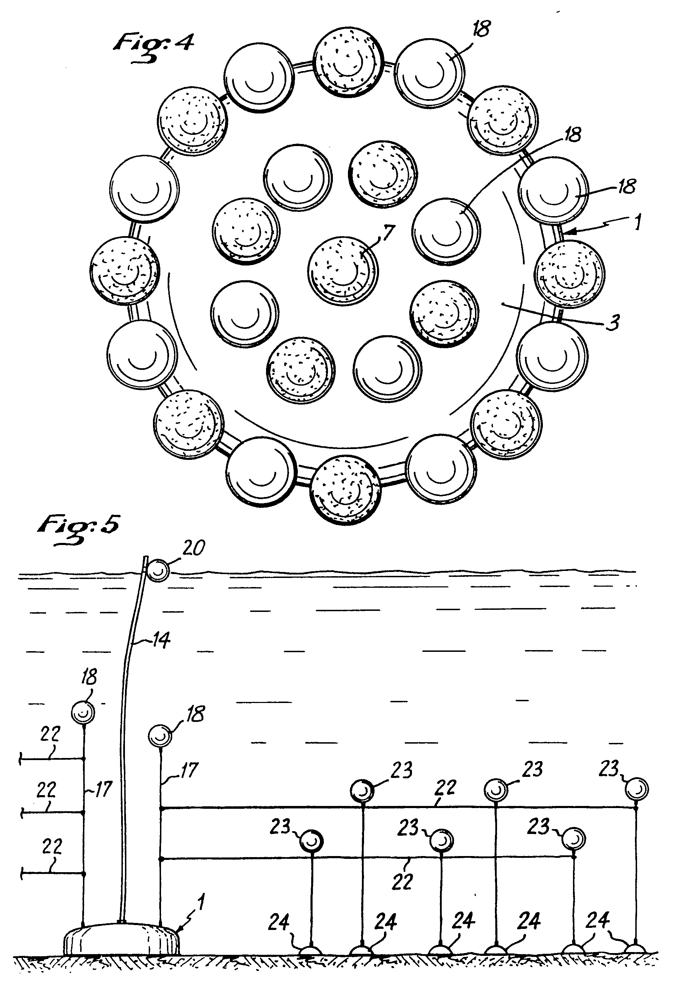

La figure 4 montre la répartition en deux cercles concentriques des flotteurs 18 qui sont, sur un même cercle, alternativement à un premier niveau et à un second niveau. Sur cette figure 4 le tube souple 14 et son flotteur 20 ne sont pas représentés.

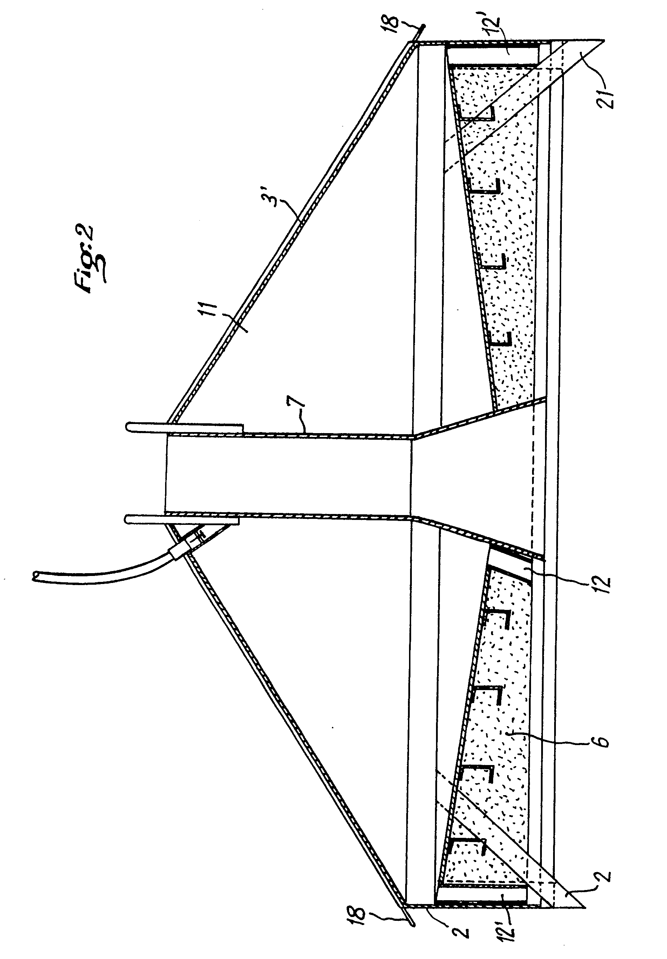

La figure 2 montre une variante de réalisation du corps d'ancrage 1 qu'il n'est pas nécessaire de décrire en détail. La plus grande différence avec le corps des figures 1, 3 et 4 est qu'il a une autre forme géométrique générale. La paroi supérieure 3 est une pyramide à base carrée, faiblement tronquée au sommet par la présence du tube central 7. Les pieds d'ancrage 21 sont constitués, aux quatre angles de la base carrée, par un profilé en L, coupé en oblique, qui traverse le béton armé 6. En outre, en plus du tube de communication 12 placé contre la partie évasée 8 du tube central 7, il existe à chaque angle un tube de communication supplémentaire 12' fixé à la paroi latérale 2. Cette forme géométrique différente ne change rien à l'existence et à l'utilisation du volume intérieur 11 ni aux oeillets 18 sauf que ceux-ci sont répartis exclusivement sur le périmètre de la base carrée de la pyramide.

Les cordages 17 servent directement de supports pour l'élevage des moules et des huîtres. Ils servent aussi, avec une répartition différente si nécessaire, à l'accrochage entre eux de cages à claire-voies servant à l'élevage de crustacés ou de poissons. Au moment de la cueillette ou de la capture, il n'est pas nécessaire de plonger dans l'eau. A l'aide du tuyau souple 14 accessible grâce à son flotteur 20, on envoie dans le volume intérieur 11 de l'air comprimé qui en chasse l'eau et qui finit par sortir sous le corps d'ancrage 1 en empruntant le ou les tubes de communication 12, 12'. Cet air comprimé a un effet d'affouillement qui aide le corps 1 à se dégager de la vase et à s'élever jusqu'à la surface, ce qui rend les cordages 17 et les cages d'élevage facilement accessibles à partir d'un bateau.

Les tronçons de chaîne 16 sont préférés à la partie inférieure des cordages 17 parce qu'ils ont une meilleure résistance à l'abrasion quand ils viennent frotter, sous l'effet des courants, contre le corps d'ancrage 1.

Ainsi qu'on l'a dit, tout moyen d'ancrage peut servir à immobiliser le corps 1 sur le fond de la mer, en plus de son poids. Quand on envisage de se servir d'un pieu d'ancrage, lorsque le fond le permet, on enfonce d'abord ce pieu dans le fond de la mer, à partir d'un bateau, et on enfile le corps 1 sur le pieu enfoncé; cette opération est facilitée par la partie évasée 8 du tube central 7.

Un dispositif réalisé conformément à l'exemple des figures 1, 3 et 4 avait un corps d'ancrage 1 d'un diamètre de 2,50 m et une hauteur de 0,80 m; il était lesté de plaques en béton 6 pesant 2 170 kg au total et le vide intérieur 11 était de 2 m³. Il était immergé à une profondeur de 20 m environ et il était équipé de 24 cordages de 10 mm de diamètre attachés chacun à un flotteur 18 en baudruche ayant un volume de 58 l, flottant au-dessus du fond respectivement à un niveau de 13 m et de 13,40 m.

La figure 5 montre que l'utilisation du dispositif de l'invention n'est pas limitée aux exemples des figures 1 à 4. Dans cet exemple, il existe moins de cordages 17 et moins de flotteurs 18 mais chaque cordage 17 est muni de plusieurs câbles secondaires 22 à des niveaux étagés. Ces câbles sont tenus à peu près horizontalement par des flotteurs auxiliaires 23 et des contrepoids 24 qui reposent sur le fond. Ces câbles secondaires servent directement de support pour l'élevage des moules et des huîtres.

## Revendications

1. Dispositif pour élevage marin comprenant un corps (1) délimitant un volume intérieur (11) ayant au moins un tube (12) de communication avec le milieu environnant et un tuyau souple (14) de passage d'air susceptible d'être porté par un flotteur (20) flottant à la surface, ledit corps étant muni à sa surface de moyens d'accrochage d'une extrémité de câbles (17) caractérisé en ce que le corps (1) et son volume intérieur (11) constituent également un corps d'ancrage (1) creux lesté pour reposer sur le fond grâce à des moyens d'immobilisation (6, 7, 21) et en ce que des flotteurs (18) sont fixés à l'autre extrémité des câbles (17).

2. Dispositif selon la revendication 1 caractérisé en ce que les flotteurs (18) sont destinés à être immergés à des niveaux différents.

3. Dispositif selon la revendication 1 caractérisé en ce qu'au moins un tube (12) de communication avec le milieu environnant est disposé dans la partie centrale du corps (1), ledit tube s'ouvrant en dessous de la face inférieure de ce dernier.

4. Dispositif selon la revendication 1 caractérisé en ce que le corps (1) est muni d'une semelle de lestage (6) fixée à son fond.

5. Dispositif selon la revendication 1 caractérisé en ce que le corps (1) est pourvu de pieds d'ancrage (21).

6. Dispositif selon la revendication 1 caractérisé en ce que le corps (1) est traversé dans sa zone centrale par un tube (7), ouvert à ses deux extrémités, destiné au passage d'un pieu d'ancrage.

7. Dispositif selon la revendication 6 caractérisé en ce que le tube (7) a une partie inférieure (8) évasée vers l'extérieur.

8. Dispositif selon la revendication 1 caractérisé en ce que les câbles (17) comprennent chacun à partir du corps (1) un tronçon de chaîne (16) suivi d'un cordage en polypropylène, ces câbles servant directement de supports d'élevage ou de moyens d'accrochage de cages d'élevage.

9. Dispositif selon la revendication 1 caractérisé en ce que des câbles secondaires (22) immergés s'étendent à plusieurs niveaux à partir des câbles (17) et sont tenus sensiblement horizontalement par des flotteurs immergés (23) et des contrepoids (24) reposant sur le fond.

## Patentansprüche

1. Vorrichtung für die Aufzucht von Meerestieren, mit einem Körper (1), der ein Innenvolumen (11) begrenzt, das mindestens ein Verbindungsrohr mit dem Umgebungsmilieu aufweist, und mit einem biegsamen Luftleitungsrohr (14), das von einem auf der Oberfläche schwimmenden Auftriebskörper (20) getragen werden kann, wobei der Körper an seiner Oberfläche mit Verankerungseinrichtungen für ein Ende von Trossen (17) ausgestattet ist, dadurch gekennzeichnet, dass der Körper (1) und sein Innenvolumen (11) gleichermassen einen hohlen, beschwerten Verankerungskörper (1) bilden, der mit Hilfe von Stillegungsvorrichtungen (6, 7, 21) auf dem Boden ruht und dass die Auftriebskörper (18) am anderen Ende der Trossen (17) befestigt sind.

2. Vorrichtung nach Anspruch 1, dadurch gekennzeichnet, dass die Auftriebskörper (18) dazu dienen, auf unterschiedlichen Niveaulagen eingetaucht zu sein.

3. Vorrichtung nach Anspruch 1, dadurch gekennzeichnet, dass mindestens ein Verbindungsrohr (12) zum Umgebungsmilieu im zentralen Abschnitt des Körpers (1) angebracht ist, und dass das Verbindungsrohr unter der Unterseite dieses Körpers mündet.

4. Vorrichtung nach Anspruch 1, dadurch gekennzeichnet, dass der Körper (1) mit einer an seinem Boden befestigten Beschwerungssohle (6) ausgestattet ist.

5. Vorrichtung nach Anspruch 1, dadurch gekennzeichnet, dass der Körper (1) mit Verankerungsfüssen (21) ausgestattet ist.

6. Vorrichtung nach Anspruch 1, dadurch gekennzeichnet, dass der Körper (1) in seiner zentralen Zone von einem Rohr (7) durchdrungen wird, das an seinen beiden Enden offen ist und zum Durchtritt eines Verankerungspfahls dient.

7. Vorrichtung nach Anspruch 6, dadurch gekennzeichnet, dass das Rohr (7) einen unteren, nach aussen erweiterten Abschnitt (8) aufweist.

8. Vorrichtung nach Anspruch 1, dadurch gekennzeichnet, dass die Trossen (17) jeweils ausgehend vom Körper (1) einen Kettenabschnitt (16) aufweisen, an den sich ein Polypropylen-Seil anschliesst, und dass die Trossen direkt als Halterungen oder Verankerungen der Zuchtkäfige dienen.

9. Vorrichtung nach Anspruch 1, dadurch gekennzeichnet, dass sich eingetauchte Sekundärtrossen (22), ausgehend von den Trossen (17) auf mehreren Niveauhöhen erstrecken und durch eingetauchte Auftriebskörper (23), sowie auf dem Boden ruhende Gegengewichte (24) im wesentlichen horizontal gehalten werden.

**Claims**

1. Device for fish farming comprising a body (1) defining an internal volume (11) having at least one tube (12) communicating with the surrounding medium and a flexible pipe (14) for the passage of air which can be carried by a float (20) floating on the surface, the said body being provided on its surface with hooking means at one end of cables (17), characterized in that the body (1) and its internal volume (11) both constitute a hollow anchoring body (1) weighted so that it rests on the sea bed by virtue of means for holding it steady (6, 7, 21) and in that floats (18) are attached to the other end of the cables (17).

2. Device according to Claim 1, characterized in that the floats (18) are intended to be submerged at different levels.

3. Device according to Claim 1, characterized in that at least one tube (12) for communicating with the surrounding medium is arranged in the central part of the body (1), the said tube opening below the lower face of this body.

4. Device according to Claim 1, characterized in that the body (1) is provided with a weighting slab (6) attached to its bottom.

5. Device according to Claim 1, characterized in that the body (1) is provided with anchoring bases (21).

6. Device according to Claim 1, characterized in that the body (1) has passing through its central zone a tube (7) open at its two ends, intended for the passing through of an anchoring base.

7. Device according to Claim 6, characterized in that the tube (7) has a low part (8) opened out towards the outside.

8. Device according to Claim 1, characterized in that the cables (17) each have coming from the body (1) a section of chain (16) attached to a polypropylene rope, these cables being directly used as farming supports or as hooking means for farming pens.

9. Device according to Claim 1, characterized in that submerged secondary cables (22) extend to several levels from the cables (17) and are kept approximately horizontal by submerged floats (23) and counterweights (24) resting on the sea bed.

0 153 246

*Fig:1*

*Fig. 2*

0 153 246

Fig. 3

*Fig:4*

*Fig:5*